# EUROPEAN PATENT SPECIFICATION

(11) **EP 2 784 560 B1**
(45) Date of publication and mention of the grant of the patent: **05.04.2017**
(21) Application number: 12851053.4
(22) Date of filing: 22.10.2012
(51) Int. Cl.: G02B 7/182, F24J 2/00, B64B 1/02

(54) **METHOD FOR CONTROLLING LAND SURFACE TEMPERATURE USING STRATOSPHERIC AIRSHIPS AND REFLECTOR**
VERFAHREN ZUR STEUERUNG EINER LANDOBERFLÄCHENTEMPERATUR UNTER VERWENDUNG VON STRATOSPHÄRENLUFTSCHIFFEN UND REFLEKTOREN
PROCÉDÉ DE RÉGULATION DE LA TEMPÉRATURE D'UNE SURFACE AU SOL À L'AIDE DE DIRIGEABLES STRATOSPHÉRIQUES ET D'UN RÉFLECTEUR

(30) Priority: 21.11.2011 KR 20110121491
(43) Date of publication of application: 01.10.2014
(73) Proprietor: Korea Aerospace Research Institute, Daejeon 305-806 (KR)
(72) Inventor: CHOI, Joon-Min, Daejeon 305-761 (KR)
(74) Representative: Grünecker Patent- und Rechtsanwälte PartG mbB
(86) International application number: PCT/KR2012/008642
(87) International publication number: WO 2013/077557

(56) References cited:
- JP-A- 2004 266 929
- US-A1- 2004 065 773
- US-A1- 2008 030 884
- US-A1- 2009 032 214

## Description

### [Technical Field]

The present invention relates to a method of controlling a land surface temperature using stratospheric airships and a reflector, and more specifically to a method of controlling a land surface temperature using stratospheric airships and a reflector, in which a large reflector is installed in the stratospheric airships and blocks or reflects sunlight to freely control the temperature, for example, to locally increase or decrease temperature in a predetermined area.

### [Background Art]

As global warming has recently been accelerated, glaciers and permanent snow maintaining more than 70% of fresh water existing on the earth are continuously melting.

If the glaciers and the permanent snow are melting, the fresh water is carried away and the sea level rises, thereby causing countries adjacent to the seashore to sink in seawater. In the long term, change in salinity of seawater may destroy the aquatic ecosystem of the sea.

To solve such a problem that the glaciers or the permanent snow are gradually melting due to global warming, climatic environments have to be fundamentally changed. However, time and efforts are too long and too much to change the fundamental climatic environments through human endeavor.

Recently, there has been proposed a method of protecting the glaciers and the permanent snow by lowering temperature in a predetermined area as sunlight exposed in the air is artificially blocked to control a large amount of sunlight beating down on a predetermined area.

Representatively, US patent publication No. 2009/0032214, titled "SYSTEM AND METHOD OF CONTROL OF THE TERRESTRIAL CLIMATE AND ITS PROTECTION AGAINST WARMING AND CLIMATIC CATASTROPHES CAUSED BY WARMING SUCH AS HURRICANES", discloses a method of blocking sunlight in a predetermined area, in which an airplane generates exhaust gas such as volcanic ash to thereby make atmospheric environments such as mini nuclear winter.

Although such a sunlight blocking method is easily applied to a relatively large area, the exhaust gas may remain in the air and move to another area by a convection current, thereby causing serious air pollution. Further, in a predetermined area, this method is difficult to keep a sunlight blocking condition to last for a long time.

Also, US patent publication No. 2008/0030884, titled "DEVICE AND METHOD FOR AFFECTING LOCAL CLIMATIC PARAMETERS", discloses a method of blocking sunlight in a predetermined area, in which an unmanned aerial vehicle equipped with a sunlight reflector is aviated.

However, such a sunlight blocking method may have problems that exhaust gas of the unmanned aerial vehicle influences atmospheric contamination and unstable atmosphere in the troposphere makes it difficult to position the unmanned aerial vehicle. Also, the unmanned aerial vehicle needs periodical refueling and maintenance, and is hard to stay for a long time in the troposphere.

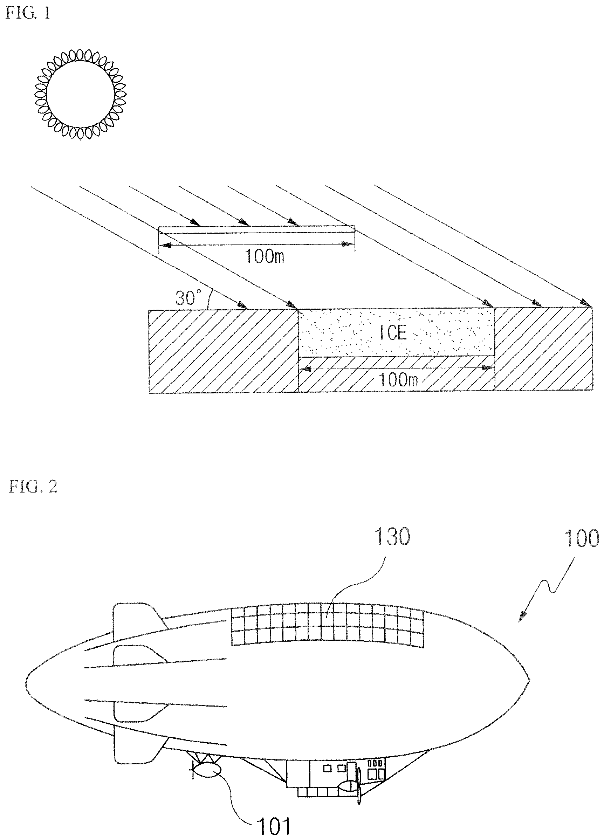

Further, as shown in Fig. 1, the reflector installed in the unmanned aerial vehicle maintains level with a land surface in the troposphere, so that it is thus difficult to effectively block the sunlight beating down on the land surface at a predetermined angle. Therefore, the blocked area is not optimized.

### [Disclosure]

### [Technical Problem]

The present invention is conceived to solve the foregoing problems, and an aspect of the present invention is to provide a method of controlling a land surface temperature using stratospheric airships and a reflector, in which a large reflector is installed in the stratospheric airships and blocks or reflects sunlight in the stratosphere to decrease temperature in a predetermined area, so that the glaciers or the permanent snow can be prevented from melting due to global warming and the fresh water can be prevented from being carried away without environmental contamination.

Also, another aspect of the present invention is to provide a method of controlling a land surface temperature using stratospheric airships and a reflector, in which the number and angle of large reflectors installed in the stratospheric airships are properly controlled, so that the large reflector in the stratosphere can reflect sunlight to increase temperature in a predetermined area, thereby having a temperature proper to a human's living condition at intense cold or cold wave due to abnormal climate.

### [Technical Solution]

In accordance with one aspect of the present invention, there is provided a method of controlling a land surface temperature using stratospheric airships and a reflector by reflecting sunlight from a reflector that has four corners connected to lower ends of support lines coupled to a plurality of airships in a vertically downward direction and is tetragonally unfolded in the air, wherein a reflecting surface of the reflector is inclined and maintained at an angle perpendicular to an incident angle of the sunlight so as to block the sunlight introduced onto a land surface.

The airship may be located in the stratosphere, move from the land surface to the stratosphere in the state that the reflector is folded, and is positioned in the stratosphere so that the reflector is unfolded to have a reflecting surface perpendicular to an incident angle of the sunlight.

The airship may be controlled to have a posture through a propelling system, and includes a solar cell to get propelling power and a fuel cell for an auxiliary power supply.

The reflector may include fabric made of nylon or polyester, or a carbon nano tube, and includes at least one surface between both surfaces thereof coated with a material for reflecting sunlight.

A plurality of reflectors may be grouped by a plurality of airships so that the area of the land surface, in which the sunlight is blocked, is increased.

The support line may include a wire.

In accordance with one aspect of the present invention, there is provided a method of controlling a land surface temperature using stratospheric airships and a reflector by reflecting sunlight from a reflector that has four corners connected to lower ends of support lines coupled to a plurality of airships in a vertically downward direction and is unfolded in echelon in the air, wherein a reflecting surface of the reflector is inclined and maintained to form an obtuse angle to an incident angle of the sunlight so as to introduce more reflected light of the sunlight into a land surface of a certain area.

The reflector may introduce more sunlight into the land surface of the certain area by adjusting an angle of the reflecting surface to an incident angle of the sunlight as the airships supporting corners of opposite long and short sides of the reflector are moved and positioned.

An inclination angle of the reflector may be controlled with respect to the incident angle of the sunlight as a pair of airships supporting the corners of the short side intersectionally moves between a pair of airships supporting the corners of the long side.

An inclination angle of the reflector may be controlled with respect to the incident angle of the sunlight as a pair of airships supporting the corners of the long side intersectionally moves from an outside of a pair of airships supporting the corners of the short side.

A plurality of reflectors may be grouped at different angles in a longitudinal direction with respect to an incident direction of the sunlight, and a distance between front and back neighboring reflectors may be set up so that the reflected light of the back reflector cannot be blocked by the front reflector.

A plurality of reflectors may be grouped at different angles in a transverse direction with respect to an incident direction of the sunlight.

### [Advantageous Effects]

In accordance with an aspect of the present invention, there is provided a method of controlling a land surface temperature using stratospheric airships and a reflector, in which a large reflector is installed in the stratospheric airships and blocks or reflects sunlight in the stratosphere to decrease temperature in a predetermined area, so that the glaciers or the permanent snow can be prevented from melting due to global warming and the fresh water can be prevented from being carried away without environmental contamination.

In accordance with another aspect of the present invention, there is also provided a method of controlling a land surface temperature using stratospheric airships and a reflector, in which the number and angle of large reflectors installed in the stratospheric airships are properly controlled, so that the large reflector in the stratosphere can reflect sunlight to increase temperature in a predetermined area, thereby having a temperature proper to a human's living condition at intense cold or cold wave due to abnormal climate.

### [Description of Drawings]

Fig. 1 is a schematic view of a conventional method of controlling a land surface temperature through sunlight blocking.
Figs. 2 and 3 are views showing stratospheric airships and a reflector for achieving a method of controlling a land surface temperature according to an embodiment of the present invention.
Fig. 4 is a perspective view showing that a tetragonal reflector is unfolded through a plurality of airships in the method of controlling a land surface temperature according to an embodiment of the present invention.
Fig. 5 is a schematic view showing that sunlight is blocked in the method of controlling a land surface temperature according to an embodiment of the present invention.
Fig. 6 is a schematic view showing that sunlight is blocked using a plurality of reflectors in the method of controlling a land surface temperature according to an embodiment of the present invention.
Fig. 7 is a perspective view showing that a trapezoidal reflector is unfolded through a plurality of airships in the method of controlling a land surface temperature according to an embodiment of the present invention.
Figs. 8a and 8b are an exemplary view and a cross-section view showing that an inclination angle of the trapezoidal reflector is controlled.
Fig. 9 is a view showing that reflected light of sunlight is introduced into the land surface through the trapezoidal reflector applied to an embodiment of the present invention.
Figs. 10 and 11 are views showing a method of controlling a land surface temperature according to another embodiment of the present invention, in which many trapezoidal reflectors are used in longitudinal and transverse directions.

### [Best Mode]

The foregoing aspects about technical configuration and operative effects in a method of controlling a land surface temperature using stratospheric airships and a reflector according to an embodiment of the present invention will be clearly appreciated by the following descriptions with reference to accompanying drawings.

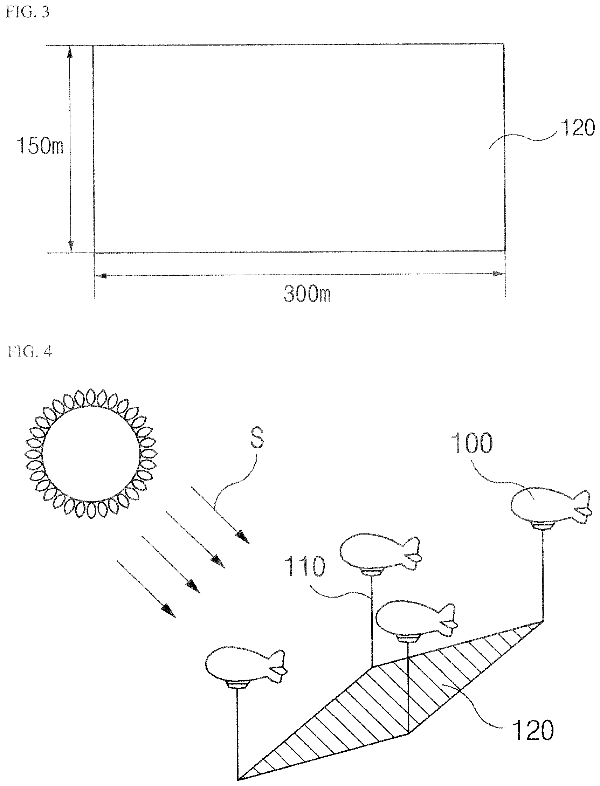

Figs. 2 and 3 are views showing stratospheric airships and a reflector for achieving a method of controlling a land surface temperature according to an embodiment of the present invention, and Fig. 4 is a perspective view showing that a tetragonal reflector is unfolded through a plurality of airships in the method of controlling a land surface temperature according to an embodiment of the present invention.

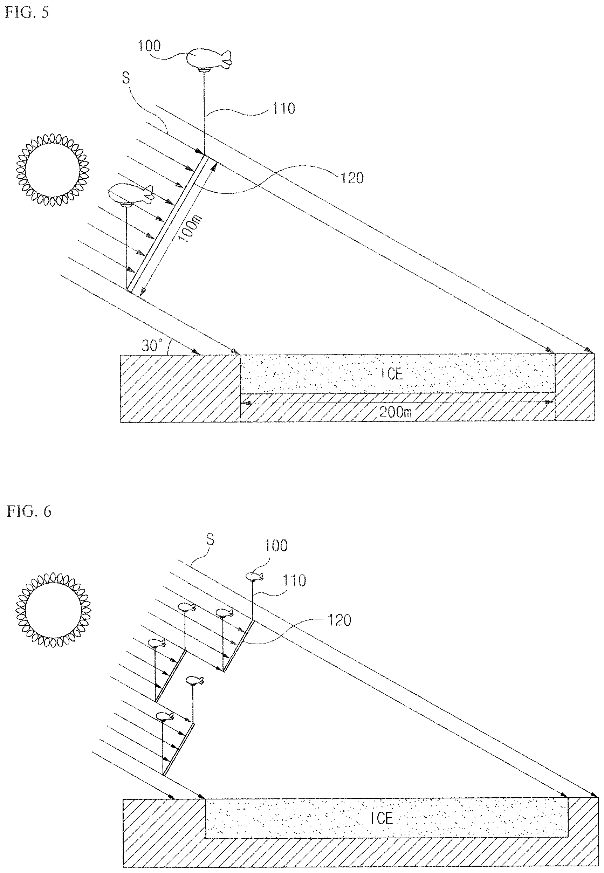

Also, Fig. 5 is a schematic view showing that sunlight is blocked in the method of controlling a land surface temperature according to an embodiment of the present invention.

As shown therein, a method of controlling a land surface temperature using stratospheric airships and a reflector may include first unfolding a tetragonal reflector 120 as four corners of the tetragonal reflector 120 are supported by lower ends of support lines 110 under the plurality of airships 100 (refer to Fig. 4), in which the reflector 120 is inclined and maintained at an angle perpendicular to an incident angle of sunlight S. Here, the support line is a wire made of metal, nonmetal or the like any material as long as it can support the reflector 120 at the lower end thereof.

At this time, as shown in Fig. 5, the sunlight S going toward the land surface is reflected from the reflector 120 in a direction opposite to the land surface, so that the sunlight S going toward the land surface can be blocked. Further, the reflecting surface of the reflector 120 is inclined and maintained at an angle perpendicular to the incident angle of the sunlight S, so that a sunlight blocking area in the land surface can be efficiently largely formed.

Meanwhile, the airship 100 for hovering the reflector in the sky can maintain altitude in the stratosphere (20 to 50km) where a convection current is marginal. To this end, the airship 100 is filled with helium gas and the posture and location of the airship 100 are respectively controlled and moved by a separate propelling system 101.

In addition, a solar cell 130 and a fuel cell as an auxiliary power applying means may be mounted to get the propelling power. Also, the airship may include a global positioning system (GPS) transmitting/receiving device for location control, and a relative angle measurer for adjusting the angle of the reflector in accordance with the location movement.

In current technology, the stratospheric airship includes an integrated sensor is structure (ISIS) airship that has been developed by support of the United States Air Force. The ISIS airship is developed as an airship that can fly at an altitude as high as it is not affected by a jet stream.

The reflector 120 supported by the airships is as shown in Fig. 3 achieved by a large reflector having a length of about 150m and a breadth of about 300m.

The reflector 120 may have a frame manufactured by a carbon nano tube having high strength and very lightweight. In addition, a more lightweight material may be applied to the reflector 120. Also, the reflector 120 may be made of nylon or polyester fabric. Further, the reflector 120 may have a surface facing the sunlight, which is coated with a material, such as an aluminum tape capable of reflecting the sunlight. Alternatively, the reflector 120 may be generally configured with thin fabric, the shape of which is taken by an external proper reinforce material.

Also, if the reflector 120 is as shown in Fig. 5 disposed perpendicularly to the incident angle of the sunlight S, it is possible to block the sunlight by absorbing the sunlight. Therefore, considering the block of the sunlight rather than reflecting efficiency, the reflecting surface may be configured with an inexpensive reflecting surface so that sunlight cannot transmit the reflector 120.

With this configuration, the reflector 120 is folded and coupled to the support line 110 of the airship 100 in the land surface, moved to the stratosphere as the airship 100 flies, and unfolded as the airships 100 are positioned in the stratosphere.

Fig. 6 is a schematic view showing that sunlight is blocked using a plurality of reflectors in the method of controlling a land surface temperature according to an embodiment of the present invention. If the area where the sunlight S has to be blocked is large in the land surface, a plurality of reflectors 120 are grouped and positioned flying in the stratosphere, thereby lowering a land surface temperature of a larger area.

Accordingly, the sunlight entering the Arctic and Antarctic poles is blocked while global warming increases, so that the temperature in a certain area can be lowered, thereby preventing the glaciers or the permanent snow from melting.

At this time, the reflector 120 is maintained at an angle perpendicular to the incident angle of the sunlight in order to get an effect of blocking the maximum area on the land surface.

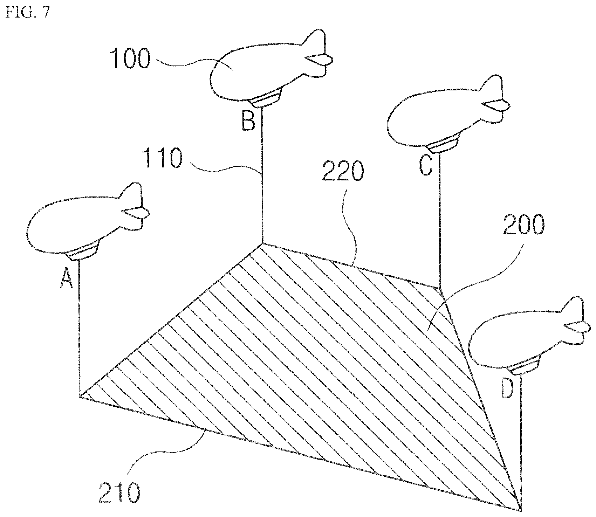

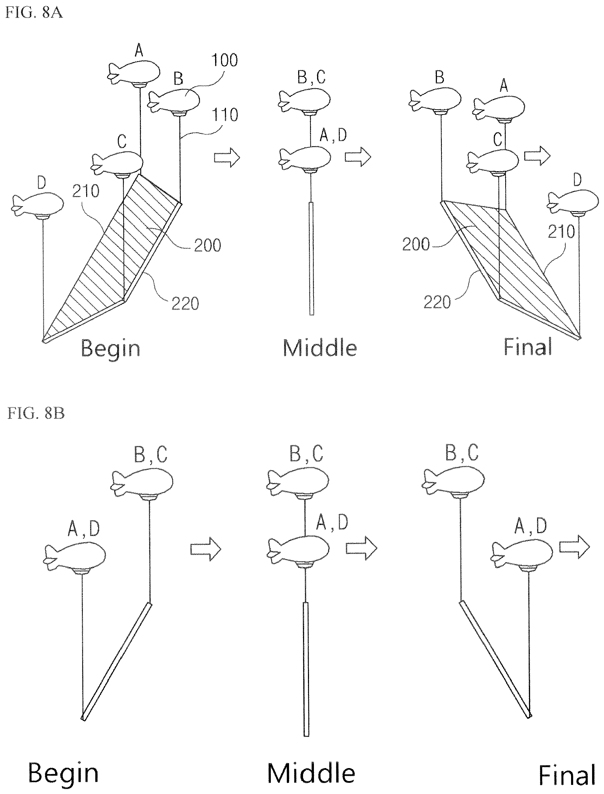

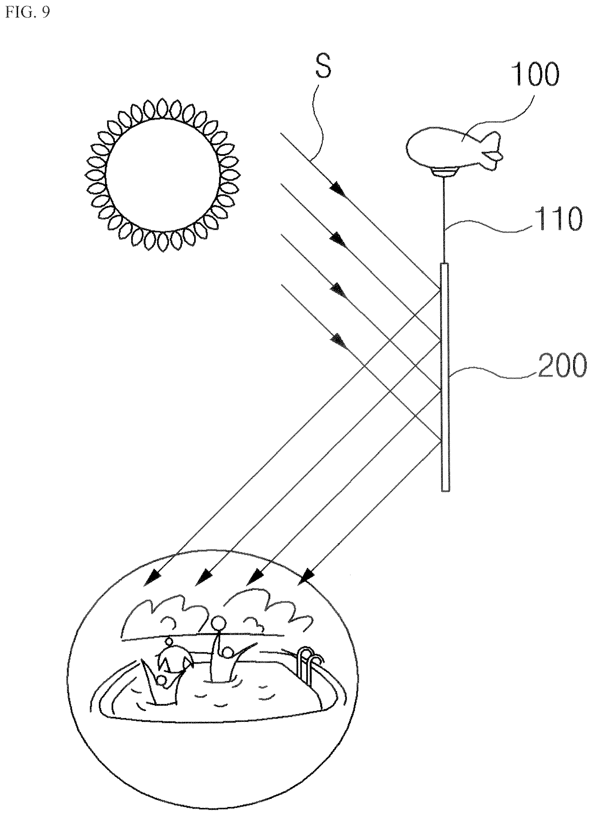

Fig. 7 is a perspective view showing that a trapezoidal reflector is unfolded through a plurality of airships in the method of controlling a land surface temperature according to an embodiment of the present invention, Figs. 8a and 8b are an exemplary view and a cross-section view showing that an inclination angle of the trapezoidal reflector is controlled, and Fig. 9 is a view showing that reflected light of sunlight is introduced into the land surface through the trapezoidal reflector applied to an embodiment of the present invention.

As shown therein, in a method of controlling a land surface temperature according to this embodiment of the present invention, a trapezoidal reflector 200 having opposite sides different in length is slantly supported by the support lines 110 under the plurality of airships 100.

The trapezoidal reflector 200 has four corners supported by the support lines 110, and the sunlight S is blocked or introduced through the trapezoidal reflector 200 unfolded in the stratosphere.

The trapezoidal reflector 200 employed in this embodiment is adjustable in angle as shown in Figs. 8a and 8b by moving the positions of the airships 100 supporting four corners of the reflector 200.

That is, the reflector 200 may block the sunlight entering the land surface or introduce more reflected light of the sunlight into a land surface of a certain area since the inclination angle of the reflector 200 can be adjusted by moving the positions of the airships 100 supporting the corners of the short side 220 and the long side 210 as distances are formed in between the airships A and D supporting the long side 210 and in between the airships B and C supporting the short side 220 while the airships 100 support the corners of the opposite long and short sides 210 and 220.

At this time, the inclination angle of the reflector 200 may be controlled to become a right angle or an obtuse angle with respect to the incident angle of the sunlight S as the pair of airships B and C supporting the corners of the short side 220 intersectionally moves between the pair of airships A and D supporting the corners of the long side 210.

On the other hand, the inclination angle of the reflector 200 may be controlled to become a right angle or an obtuse angle with respect to the incident angle of the sunlight S as the pair of airships A and D supporting the corners of the long side 210 intersectionally moves from the outside of the pair of airships B and C supporting the corners of the short side 210.

Like this, if the inclination angle, at which the reflecting surface of the trapezoidal reflector 200 is disposed, is controlled to become the obtuse angle with respect to the incident angle of the sunlight S as shown in FIG. 9, the sunlight reflected from the reflector 200 is more introduced into a certain area so that temperature can be increased in the area of intense cold or cold wave, thereby improving a living condition.

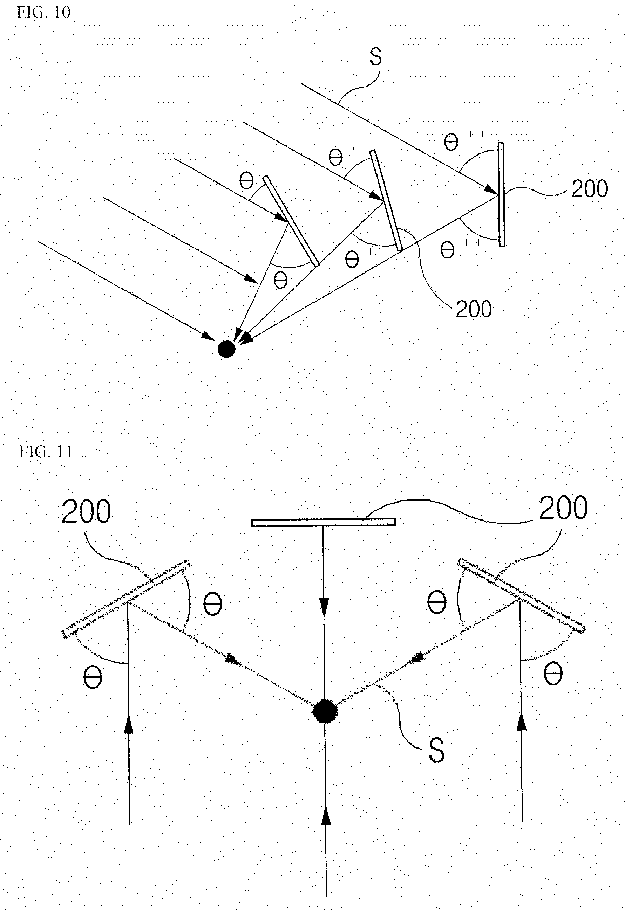

Meanwhile, Figs. 10 and 11 are views showing a method of controlling a land surface temperature according to another embodiment of the present invention, in which many trapezoidal reflectors are used in longitudinal and transverse directions.

As shown in Fig. 10, in a method of adjusting the land surface temperature according to this embodiment, a plurality of reflectors 200 are grouped in the incident direction of the sunlight S beating down on to the land surface.

In this case, the plurality of reflectors 200 may be installed at different angles with respect to the incident angle of the sunlight S, so that the sunlight reflected from the respective reflectors 200 can be introduced into a certain area, thereby increasing the land surface temperature in the certain area.

Here, Fig. 10 is a lateral view showing that many reflectors are grouped along the longitudinal direction to the sunlight in order to increase the temperature in the certain area (refer to a black circle). In the group of reflectors, a distance between the front reflector and the back reflector may be controlled so that the sunlight of the back reflector cannot be blocked by the front reflector.

Also, as shown in Fig. 11, in a method of controlling the land surface temperature according to this embodiment, a plurality of reflectors 200 may be grouped forming different angles with respect to the incident direction of the sunlight S above the land surface. On the contrary to Fig. 10 (regarding the longitudinal direction), Fig. 11 shows that a plurality of reflectors are installed along a transverse direction to the sunlight in order to increase the temperature in the certain area (refer to a black circle).

In this case, the plurality of reflectors 200 are respectively installed at different angles with respect to the incident direction of the sunlight S, so that the sunlight reflected from each reflector 200 can be introduced into the certain area, thereby increasing the temperature in the certain area.

Although some embodiments have been described herein with reference to the accompanying drawings, it will be understood by those skilled in the art that these embodiments are provided for illustration only, and various modifications, changes, alterations and equivalent embodiments can be made without departing from the scope of the present invention, as defined by the accompanying claims.

## Claims

1. A method of controlling a land surface temperature using stratospheric airships (100, A, B, C, D) and a reflector (120, 200) by reflecting sunlight from a reflector (120, 200) that is tetragonally unfolded in the air,
**characterized in that**
the reflector (120, 200) has four corners connected to lower ends of support lines (110) coupled to a plurality of airships (100, A, B, C, D) in a vertically downward direction,
wherein a reflecting surface of the reflector (120, 200) is inclined and maintained at an angle perpendicular to an incident angle of the sunlight so as to block the sunlight introduced onto a land surface.

2. The method according to claim 1, wherein the airships are located in the stratosphere, move from the land surface to the stratosphere in the state that the reflector is folded, and are positioned in the stratosphere so that the reflector is unfolded to have a reflecting surface perpendicular to an incident angle of the sunlight.

3. The method according to claim 1, wherein the airships are controlled to have a posture through a propelling system (101), and comprise a solar cell (130) to get propelling power and a fuel cell for an auxiliary power supply.

4. The method according to claim 1, wherein the reflector comprises fabric made of nylon or polyester, or a carbon nano tube, and comprises at least one surface between both surfaces thereof coated with a material for reflecting sunlight.

5. The method according to claim 1, wherein a plurality of reflectors are grouped by a plurality of airships so that the area of the land surface, in which the sunlight is blocked, is increased.

6. The method according to claim 1, wherein the support line comprises a wire.

7. A method of controlling a land surface temperature using stratospheric airships (100, A, B, C, D) and a reflector (120, 200) by reflecting sunlight from a reflector that is unfolded in echelon in the air,
**characterized in that**
the reflector (120, 200) has four corners connected to lower ends of support lines (110) coupled to a plurality of airships (100, A, B, C, D) in a vertically downward direction,
wherein a reflecting surface of the reflector (120, 200) is inclined and maintained to form an obtuse angle to an incident angle of the sunlight so as to introduce more reflected light of the sunlight into a land surface of a certain area.

8. The method according to claim 7, wherein the reflector (120, 200) introduces more sunlight into the land surface of the certain area by adjusting an angle of the reflecting surface to an incident angle of the sunlight as the airships (A, B, C, D) supporting corners of opposite long (210) and short (220) sides of the reflector are moved and positioned.

9. The method according to claim 8, wherein an inclination angle of the reflector (120, 200) is controlled with respect to the incident angle of the sunlight as a pair of airships (B, C) supporting the corners of the short side (220) intersectionally moves between a pair of airships (A, D) supporting the corners of the long side (210).

10. The method according to claim 8, wherein an inclination angle of the reflector (120, 200) is controlled with respect to the incident angle of the sunlight as a pair of airships (A, D) supporting the corners of the long side (210) intersectionally moves from an outside of a pair of airships (B, C) supporting the corners of the short side (220).

11. The method according to any one of claims 7 to 10, wherein a plurality of reflectors (200) are grouped at different angles in a longitudinal direction with respect to an incident direction of the sunlight, and a distance between front and back neighboring reflectors is set up so that the reflected light of the back reflector cannot be blocked by the front reflector.

12. The method according to any one of claims 7 to 10, wherein a plurality of reflectors (200) are grouped at different angles in a transverse direction with respect to an incident direction of the sunlight.

## Patentansprüche

1. Verfahren zum Steuern einer Landoberflächentemperatur unter Verwendung von stratosphärischen Luftschiffen (100, A, B, C, D) und einem Reflektor (120, 200) durch Reflektieren von Sonnenlicht von einem Reflektor (120, 200), der in der Luft tetragonal entfaltet wird,
**dadurch gekennzeichnet, dass**
der Reflektor (120, 200) vier Ecken aufweist, die mit unteren Enden von Halteleinen (110) verbunden sind, welche mit einer Vielzahl von Luftschiffen (100, A, B, C, D) in einer Richtung vertikal abwärts gekoppelt sind,
wobei eine Reflexionsfläche des Reflektors (120, 200) geneigt ist und in einem Winkel lotrecht zu einem Einfallswinkel des Sonnenlichts gehalten wird, um das auf eine Landoberfläche einfallende Sonnenlicht zu blockieren.

2. Verfahren nach Anspruch 1, wobei die Luftschiffe in der Stratosphäre positioniert sind und sich in dem Zustand von der Landoberfläche in die Stratosphäre bewegen, in dem der Reflektor gefaltet ist, und so in der Stratosphäre positioniert werden, dass der Reflektor entfaltet wird und seine Reflexionsfläche lotrecht zu einem Einfallswinkel des Sonnenlichts ausgerichtet ist.

3. Verfahren nach Anspruch 1, wobei die Luftschiffe durch ein Antriebssystem (101) in eine bestimmte Position gesteuert werden und eine Solarzelle (130) umfassen, um die Antriebsleistung zu erhalten, sowie eine Brennstoffzelle für eine Hilfsstromversorgung.

4. Verfahren nach Anspruch 1, wobei der Reflektor ein Gewebe aus Nylon oder Polyester oder ein Kohlenstoff-Nanotube umfasst, und mindestens eine Fläche zwischen beiden Flächen davon umfasst, die mit einem Material zum Reflektieren von Sonnenlicht beschichtet ist.

5. Verfahren nach Anspruch 1, wobei eine Vielzahl von Reflektoren von einer Vielzahl von Luftschiffen gruppiert wird, so dass die Fläche der Landoberfläche erhöht wird, auf welcher das Sonnenlicht blockiert wird.

6. Verfahren nach Anspruch 1, wobei die Halteleine einen Draht umfasst.

7. Verfahren zum Steuern einer Landoberflächentemperatur unter Verwendung von stratosphärischen Luftschiffen (100, A, B, C, D) und einem Reflektor (120, 200) durch Reflektieren von Sonnenlicht von einem Reflektor, der in der Luft im Staffelflug entfaltet wird,
**dadurch gekennzeichnet, dass**
der Reflektor (120, 200) vier Ecken aufweist, die mit unteren Enden von Halteleinen (110) verbunden sind, welche mit einer Vielzahl von Luftschiffen (100, A, B, C, D) in einer Richtung vertikal abwärts gekoppelt sind,
wobei eine Reflexionsfläche des Reflektors (120, 200) geneigt und so gehalten wird, dass ein stumpfer Winkel zu einem Einfallswinkel des Sonnenlichts gebildet wird, um mehr reflektiertes Sonnenlicht auf eine Landoberfläche eines bestimmten Gebiets zu leiten.

8. Verfahren nach Anspruch 7, wobei der Reflektor (120, 200) mehr Sonnenlicht auf die Landoberfläche des bestimmten Gebiets durch Anpassen eines Winkels der Reflexionsfläche auf einen Einfallswinkel des Sonnenlichts leitet, indem die Luftschiffe (A, B, C, D), welche die Ecken von gegenüberliegenden langen (210) und kurzen (220) Seiten des Reflektors tragen, bewegt und positioniert werden.

9. Verfahren nach Anspruch 8, wobei ein Neigungswinkel des Reflektors (120, 200) bezüglich des Einfallswinkel des Sonnenlichts gesteuert wird, indem sich ein Paar von Luftschiffen (B, C), welches die Ecken der kurzen Seite (220) trägt, überschneidend zwischen ein Paar von Luftschiffen (A, D) bewegt, das die Ecken der langen Seite (210) trägt.

10. Verfahren nach Anspruch 8, wobei ein Neigungswinkel des Reflektors (120, 200) bezüglich des Einfallswinkel des Sonnenlichts gesteuert wird, indem sich ein Paar von Luftschiffen (A, D), welches die Ecken der langen Seite (210) trägt, überschneidend von einer Außenseite eines Paares von Luftschiffen (B, C) bewegt, das die Ecken der kurzen Seite (220) trägt.

11. Verfahren nach einem der Ansprüche 7 bis 10, wobei eine Vielzahl von Reflektoren (200) in verschiedenen Winkeln in einer Längsrichtung bezüglich einer Einfallsrichtung des Sonnenlichts gruppiert ist, und eine Distanz zwischen vorderen und hinteren benachbarten Reflektoren so eingestellt wird, dass das reflektierte Licht des hinteren Reflektors von dem vorderen Reflektor nicht blockiert werden kann.

12. Verfahren nach einem der Ansprüche 7 bis 10, wobei eine Vielzahl von Reflektoren (200) in verschiedenen Winkeln in einer transversalen Richtung bezüglich einer Einfallsrichtung des Sonnenlichts gruppiert ist.

## Revendications

1. Procédé de régulation de la température d'une surface terrestre au moyen de dirigeables stratosphériques (100, A, B, C, D) et d'un réflecteur (120, 200) par réflexion de la lumière du soleil depuis un réflecteur (120, 200) qui est déplié en tétragone dans l'air,
**caractérisé en ce que**
le réflecteur (120, 200) a quatre coins reliés à des extrémités inférieures de lignes de support (110) couplées à une pluralité de dirigeables (100, A, B, C, D) dans une direction verticalement descendante,
une surface réfléchissante du réflecteur (120, 200) étant inclinée et maintenue à un angle perpendiculaire à un angle d'incidence de la lumière du soleil de manière à bloquer la lumière du soleil introduite sur une surface terrestre.

2. Procédé selon la revendication 1, dans lequel les dirigeables sont situés dans la stratosphère, se déplacent depuis la surface terrestre jusqu'à la stratosphère dans un état dans lequel le réflecteur est replié, et sont positionnés dans la stratosphère de telle sorte que le réflecteur est déplié pour avoir une surface réfléchissante perpendiculaire à un angle d'incidence de la lumière du soleil.

3. Procédé selon la revendication 1, dans lequel les dirigeables sont contrôlés pour avoir une posture par un système de propulsion (101), et comprennent une cellule solaire (130) pour acquérir de l'énergie de propulsion et une pile à combustible en tant qu'alimentation auxiliaire.

4. Procédé selon la revendication 1, dans lequel le réflecteur comprend du tissu constitué de nylon ou de polyester, ou un nanotube de carbone, et comprend au moins une surface entre deux surfaces de celui-ci recouverte d'un matériau destiné à réfléchir la lumière du soleil.

5. Procédé selon la revendication 1, dans lequel une pluralité de réflecteurs est regroupée par une pluralité de dirigeables de telle sorte que la superficie de la surface terrestre sur laquelle la lumière du soleil est bloquée est accrue.

6. Procédé selon la revendication 1, dans lequel la ligne de support comprend un fil.

7. Procédé de régulation de la température d'une surface terrestre au moyen de dirigeables stratosphériques (100, A, B, C, D) et d'un réflecteur (120, 200) par réflexion de la lumière du soleil depuis un réflecteur qui est déplié en échelon dans l'air,
**caractérisé en ce que**
le réflecteur (120, 200) a quatre coins reliés à des extrémités inférieures de lignes de support (110) couplées à une pluralité de dirigeables (100, A, B, C, D) dans une direction verticalement descendante,
une surface réfléchissante du réflecteur (120, 200) étant inclinée et maintenue pour former un angle obtus par rapport à un angle d'incidence de la lumière du soleil de manière à introduire plus de lumière réfléchie dans une surface terrestre d'une certaine superficie.

8. Procédé selon la revendication 7, dans lequel le réflecteur (120, 200) introduit plus de lumière du soleil dans la surface terrestre de la certaine superficie en ajustant un angle de la surface réfléchissante par rapport à un angle d'incidence de la lumière du soleil lorsque les dirigeables (A, B, C, D) supportant les coins de côtés long (210) et court (220) opposés du réflecteur sont déplacés et positionnés.

9. Procédé selon la revendication 8, dans lequel un angle d'inclinaison du réflecteur (120, 200) est contrôlé par rapport à l'angle d'incidence de la lumière du soleil lorsqu'une paire de dirigeables (B, C) supportant les coins du côté court (220) se déplace de façon croisée entre une paire de dirigeables (A, D) supportant les coins du côté long (210).

10. Procédé selon la revendication 8, dans lequel un angle d'inclinaison du réflecteur (120, 200) est contrôlé par rapport à l'angle d'incidence de la lumière du soleil lorsqu'une paire de dirigeables (A, D) supportant les coins du côté long (210) se déplacent de façon croisée à l'extérieur d'une paire de dirigeables (B, C) supportant les coins du côté court (220).

11. Procédé selon l'une quelconque des revendications 7 à 10, dans lequel une pluralité de réflecteurs (200) est regroupée à différents angles dans une direction longitudinale par rapport à une direction d'incidence de la lumière du soleil, et une distance entre réflecteurs avant et arrière voisins est réglée de telle sorte que la lumière réfléchie du réflecteur arrière ne peut pas être bloquée par le réflecteur avant.

12. Procédé selon l'une quelconque des revendications 7 à 10, dans lequel une pluralité de réflecteurs (200) est regroupée à différents angles dans une direction transversale par rapport à une direction d'incidence de la lumière du soleil.
